# EUROPÄISCHE PATENTANMELDUNG

(11) **EP 3 967 544 A1**
(43) Veröffentlichungstag der Anmeldung: **16.03.2022**
(21) Anmeldenummer: 21194551.4
(22) Anmeldetag: 02.09.2021
(51) Int. Cl.: B60L 50/53

(54) **ANTRIEBSANORDNUNG EINES SCHIENENFAHRZEUGS**

(30) Priorität: 09.09.2020 DE 102020211315
(71) Anmelder: Siemens Mobility GmbH, 81739 München (DE)
(72) Erfinder: Hassler, Stefan, 91281 Kirchenthumbach, OT Neuzirkendorf (DE)

(57) **Zusammenfassung**

Eine Antriebsanordnung eines Schienenfahrzeugs weist zumindest einen Umrichter, der mit einer ersten Anschlussseite mit einem Energieversorgungsnetz verbindbar ist und mit einer zweiten Anschlussseite an einen Gleichspannungszwischenkreis angeschlossen ist, einen Gleichspannungssteller, der mit einer ersten Anschlussseite an den Gleichspannungszwischenkreis und mit einer zweiten Anschlussseite an eine anordnungseigene Energiebereitstellungseinrichtung angeschlossen ist, und eine Steuereinrichtung, die ausgestaltet ist, in einem Normalbetrieb wahlweise entweder den Umrichter oder den Gleichspannungssteller als Spannungsquelle für den Gleichspannungszwischenkreis zu betreiben und jeweils eine Sollzwischenkreisspannung als Zielspannung für den Gleichspannungszwischenkreis vorzugeben, auf. Ferner ist die Steuereinrichtung ausgestaltet, in einem Umschaltbetrieb den Umrichter und den Gleichspannungssteller gleichzeitig zu betreiben, wobei sie dem Umrichter und dem Gleichspannungssteller unterschiedliche Zielspannungen für den Gleichspannungszwischenkreis vorgibt.

## Beschreibung

Die Erfindung betrifft eine Antriebsanordnung eines Schienenfahrzeugs, deren Gleichspannungszwischenkreis über einen Umrichter mit einem Energieversorgungsnetz verbindbar ist und über einen Gleichspannungssteller mit einer anordnungseigene Energiebereitstellungseinrichtung verbunden ist.

Derartige Antriebsanordnungen ermöglichen, das Schienenfahrzeug sowohl in einem Batteriebetrieb als auch in einem Oberleitungsbetrieb betreiben zu können. Werden elektrifizierte Streckenabschnitte befahren, so wird das Schienenfahrzeug vorzugsweise mittels der von der Oberleitung bereitgestellten Energie betrieben, während ein Betrieb des Schienenfahrzeugs bei Befahren nicht elektrifizierter Streckenabschnitte mittels der eigenen Energiebereitstellungseinrichtung bzw. einer oder mehrerer auf dem Schienenfahrzeug angeordneter Batterie erfolgt.

Der Erfindung liegt die Aufgabe zugrunde, eine Anordnung anzugeben, die geringe Umschaltzeiten bei einem Umschalten zwischen Betriebsmodi der Antriebsanordnung ermöglicht.

Diese Aufgabe wird erfindungsgemäß durch eine Antriebsanordnung mit den Merkmalen gemäß Patentanspruch 1 gelöst. Vorteilhafte Ausgestaltungen sind in abhängigen Patentansprüchen angegeben.

Erfindungsgemäß weist die Antriebsanordnung eines Schienenfahrzeugs zumindest einen Umrichter, der mit einer ersten Anschlussseite mit einem Energieversorgungsnetz verbindbar ist und mit einer zweiten Anschlussseite an einen Gleichspannungszwischenkreis angeschlossen ist, einen Gleichspannungssteller, der mit einer ersten Anschlussseite an den Gleichspannungszwischenkreis und mit einer zweiten Anschlussseite an eine anordnungseigene Energiebereitstellungseinrichtung angeschlossen ist, und eine Steuereinrichtung, die ausgestaltet ist, in einem Normalbetrieb wahlweise entweder den Umrichter oder den Gleichspannungssteller als Spannungsquelle für den Gleichspannungszwischenkreis zu betreiben und jeweils eine Sollzwischenkreisspannung als Zielspannung für den Gleichspannungszwischenkreis vorzugeben, auf. Kennzeichnend ist die Steuereinrichtung ferner ausgestaltet, in einem Umschaltbetrieb den Umrichter und den Gleichspannungssteller gleichzeitig zu betreiben, wobei sie dem Umrichter und dem Gleichspannungssteller unterschiedliche Zielspannungen für den Gleichspannungszwischenkreis vorgibt.

Ein Vorteil der erfindungsgemäßen Anordnung ist darin zu sehen, dass bei dieser ein Umschalten der Energieversorgung des Gleichspannungszwischenkreises von der externen Energieversorgung zur anordnungseigenen bzw. internen Energieversorgung und umgekehrt verzögerungsfrei erfolgen kann, da während des Umschaltens, das bis zu einige Sekunden dauern kann, der Gleichspannungszwischenkreis dauerhaft gespeist wird, nämlich zumindest kurzzeitig sowohl von dem Gleichspannungssteller als Spannungsquelle als auch von dem Umrichter als Spannungsquelle. Um dabei zu vermeiden, dass der Betrieb zweier Spannungsquellen zu einer Instabilität des Gleichspannungszwischenkreises bzw. einer Instabilität des Umrichters und/oder Gleichspannungsstellers führt, ist erfindungsgemäß vorgesehen, dass während der Zeitspanne des Umschaltens bzw. des parallelen Betriebs von Umrichter und Gleichspannungssteller dem Umrichter und dem Gleichspannungssteller unterschiedliche Zielspannungen für den Gleichspannungszwischenkreis vorgegeben werden. Diese unterschiedliche Vorgabe an Zielspannungen ermöglicht es, dass beide Komponenten, also der Umrichter und der Gleichspannungssteller, stets stabil betrieben werden können und jeweils eine ausreichende Versorgung des Gleichspannungszwischenkreises gewährleistet wird, ohne dass es Regelprobleme bezüglich des Umrichterbetriebs oder des Gleichspannungsstellerbetriebs geben kann.

Ein weiterer Vorteil der erfindungsgemäßen Anordnung besteht darin, dass bei einem Wechsel von einer externen Energieversorgung auf eine fahrzeuginterne Energieversorgung im Bereich einer Ladestation bzw. einer Ladestrecke ein mit der Anordnung versehenes Schienenfahrzeug noch im Bereich der netzseitigen Energieversorgung beschleunigt werden kann und die Beschleunigung beim Verlassen des Bereichs ruckfrei aufrechterhalten bleiben kann, weil die fahrzeugeigene Energiebereitstellungseinrichtung den Wegfall der netzseitigen Energieversorgung nahtlos bzw. unterbrechungsfrei kompensiert.

Mit Blick auf die Steuerung des Umrichters und des Gleichspannungsstellers wird es als vorteilhaft angesehen, wenn die Zielspannungen während des Umschaltens um zumindest 10% - bezogen auf die größere Zielspannung - voneinander abweichen. Schienenfahrzeugen kann die Abweichung der Zielspannungen vorzugsweise im Bereich zwischen 50 V und 200 V liegen und beispielsweise 100 V ± 10 V betragen.

Die Steuereinrichtung gibt während des gleichzeitigen Betriebs des Umrichters und des Gleichspannungsstellers dem Umrichter vorzugsweise als Zielspannung die Sollzwischenkreisspannung und dem Gleichspannungssteller als Zielspannung eine Hilfsspannung, die niedriger als die Sollzwischenkreisspannung ist, vor.

Die Steuereinrichtung kann den Gleichspannungssteller vorzugsweise in zumindest drei Betriebsarten betreiben, nämlich in einer ersten Betriebsart, bei der der Gleichspannungssteller als Ladegerät für die anordnungseigene Energiebereitstellungseinrichtung arbeitet, in einer zweiten Betriebsart, bei der der Gleichspannungssteller als Zielspannung die Hilfsspannung einstellt, und in einer dritten Betriebsart, bei der der Gleichspannungssteller als Spannungsquelle arbeitet und als Zielspannung die Sollzwischenkreisspannung einstellt.

Um bei einer Speisung des Gleichspannungszwischenkreises durch den Umrichter und einem parallelen Betrieb des Gleichspannungsstellers als Spannungsquelle eine Überlastung des Gleichspannungsstellers, der in der zweiten Betriebsart die Speisung durch den Umrichter zu kompensieren versucht, zu vermeiden, wird es als vorteilhaft angesehen, wenn insbesondere in der zweiten Betriebsart ein Stromfluss durch den Gleichspannungssteller auf einen vorgegebenen Maximalstromwert begrenzt wird.

Die Steuereinrichtung ist vorzugsweise ferner ausgestaltet, dass sie während des gleichzeitigen Betriebs des Umrichters und des Gleichspannungsstellers, bei einem Umschaltvorgang vom Umrichter als Spannungsquelle zum Gleichspannungssteller als Spannungsquelle, den Gleichspannungssteller in der zweiten Betriebsart betreibt und einen Strom durch den Gleichspannungssteller in Richtung der anordnungseigenen Energiebereitstellungseinrichtung überwacht und den Umrichter deaktiviert und den Gleichspannungssteller in die dritte Betriebsart schaltet, sobald der Strom durch den Gleichspannungssteller einen vorgegebenen Umschaltstromwert, insbesondere einen Maximalstromwert, erreicht.

Die Steuereinrichtung ist vorzugsweise derart ausgestaltet, dass sie während des gleichzeitigen Betriebs des Umrichters und des Gleichspannungsstellers, bei einem Umschaltvorgang vom Gleichspannungssteller als Spannungsquelle zum Umrichter als Spannungsquelle, den Gleichspannungssteller in der zweiten Betriebsart betreibt und die Zwischenkreisspannung überwacht und den Gleichspannungssteller in die erste Betriebsart schaltet, sobald die Zwischenkreisspannung eine vorgegebene Umschaltspannung, insbesondere die Sollzwischenkreisspannung, erreicht.

Alternativ oder zusätzlich kann in vorteilhafter Weise vorgesehen sein, dass die Steuereinrichtung während des gleichzeitigen Betriebs des Umrichters und des Gleichspannungsstellers, bei einem Umschaltvorgang vom Gleichspannungssteller als Spannungsquelle zum Umrichter als Spannungsquelle, den Gleichspannungssteller in der zweiten Betriebsart betreibt und den Stromfluss zwischen Umrichter und Gleichspannungszwischenkreis überwacht und den Gleichspannungssteller in die erste Betriebsart schaltet, sobald ein Strom von dem Umrichter in den Gleichspannungszwischenkreis fließt oder ein solcher Strom eine vorgegebene Stromschwelle überschreitet.

Im Falle einer Energieeinspeisung durch zumindest eine an den Gleichspannungszwischenkreis angeschlossene elektrische Komponente und im Falle eines aktiven Umrichters wird die eingespeiste elektrische Energie vorzugsweise über den Umrichter in das Energieversorgungsnetz und über den Gleichspannungssteller in die anordnungseigene Energiebereitstellungseinrichtung gespeist, und im Falle eines deaktivierten Umrichters wird sie vorzugsweise über den Gleichspannungssteller in die anordnungseigene Energiebereitstellungseinrichtung eingespeist.

Die speisende zumindest eine Komponente ist vorzugsweise ein über einen Wechselrichter mit dem Gleichspannungszwischenkreis verbundener Traktionsmotor und/oder ein Hilfsbetriebeumrichter.

Die Steuereinrichtung weist zur Ansteuerung des Umrichters vorzugsweise ein Umrichtersteuermodul, zur Ansteuerung des Gleichspannungsstellers ein Gleichspannungsstellermodul und zur Überwachung von Strom und/oder Spannung ein Überwachungsmodul auf.

Vorteilhaft ist es dabei, wenn das Umrichtersteuermodul in dem Umrichter und das Gleichspannungsstellermodul in dem Gleichspannungssteller integriert ist.

Die anordnungseigene Energiebereitstellungseinrichtung kann eine oder mehrere Batterien umfassen bzw. durch eine oder mehrere Batterien gebildet sein ist. Bei einem Einsatz in einem Schienenfahrzeug umfasst die Energiebereitstellungseinrichtung vorzugsweise zumindest auch eine Batterie, insbesondere eine Traktionsbatterie. Die Energiebereitstellungseinrichtung kann ferner eine oder mehrere Brennstoffzellen umfassen.

Die Erfindung bezieht sich darüber hinaus auf ein Schienenfahrzeug. Erfindungsgemäß ist vorgesehen, dass dieses zumindest eine erfindungsgemäße Antriebsanordnung aufweist.

Bezüglich der Vorteile des erfindungsgemäßen Schienenfahrzeugs und vorteilhaften Ausgestaltungen sei auf die vorstehenden Ausführungen verwiesen. Erwähnt sei lediglich nochmals der Vorteil, dass bei einem Wechsel von einer externen Energieversorgung auf eine fahrzeuginterne Energieversorgung im Bereich einer Ladestation oder Ladestrecke das Schienenfahrzeug noch im Bereich der netzseitigen Energieversorgung beschleunigt werden kann, wobei beim Verlassen des netzseitigen Energieversorgungsbereichs die Beschleunigung ruckfrei aufrechterhalten bleiben kann, weil die fahrzeugeigene Energiebereitstellungseinrichtung den Wegfall der netzseitigen Energieversorgung nahtlos bzw. unterbrechungsfrei kompensieren kann.

Die Erfindung bezieht sich darüber hinaus auf ein Verfahren zum Betreiben einer Antriebsanordnung, wobei die Antriebsanordnung zumindest einen Umrichter, der mit einer ersten Anschlussseite mit einem Energieversorgungsnetz verbindbar ist und mit einer zweiten Anschlussseite an einen Gleichspannungszwischenkreis angeschlossen ist, einen Gleichspannungssteller, der mit einer ersten Anschlussseite an den Gleichspannungszwischenkreis und mit einer zweiten Anschlussseite an eine anordnungseigene Energiebereitstellungseinrichtung angeschlossen ist, und eine Steuereinrichtung, welche in einem Normalbetrieb wahlweise entweder den Umrichter oder den Gleichspannungssteller als Spannungsquelle für den Gleichspannungszwischenkreis betreibt und jeweils eine Sollzwischenkreisspannung als Zielspannung für den Gleichspannungszwischenkreis vorgibt, aufweist. Kennzeichnend werden von der Steuereinrichtung in einem Umschaltbetrieb der Umrichter und der Gleichspannungssteller gleichzeitig betrieben, wobei sie dem Umrichter und dem Gleichspannungssteller unterschiedliche Zielspannungen für den Gleichspannungszwischenkreis vorgibt.

Bezüglich der Vorteile des erfindungsgemäßen Verfahrens sei wiederum auf die obigen Ausführungen im Zusammenhang mit der erfindungsgemäßen Antriebsanordnung verwiesen.

Die Erfindung wird nachfolgend anhand von Ausführungsbeispielen näher erläutert. Dabei zeigen beispielhaft
- Fig. 1-5: ein erstes Ausführungsbeispiel für eine Anordnung, die einen Bestandteil eines Schienenfahrzeugs bildet, wobei die Figuren 2 bis 4 unterschiedliche Betriebsmodi der Anordnung darstellen,
- Fig. 6: ein zweites Ausführungsbeispiel für eine Anordnung, die einen Bestandteil eines Schienenfahrzeugs bildet, und
- Fig. 7: ein drittes Ausführungsbeispiel für eine Anordnung, die einen Bestandteil eines Schienenfahrzeugs bildet.

In den Figuren werden für identische oder vergleichbare Komponenten stets dieselben Bezugszeichen verwendet.

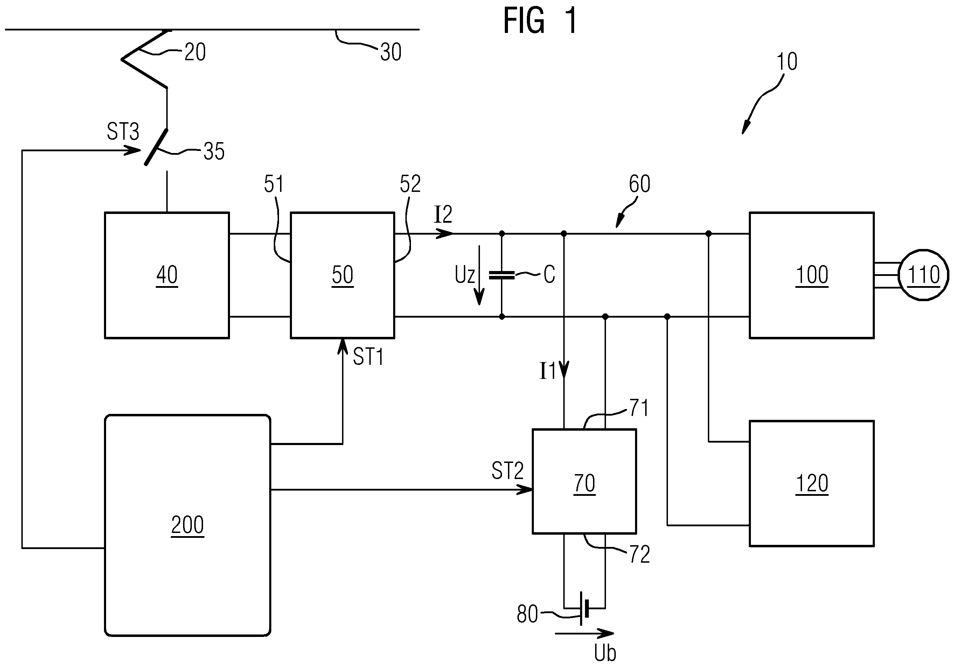

Die Figur 1 zeigt ein Ausführungsbeispiel für eine Anordnung 10, die einen Bestandteil eines aus Gründen der Übersicht nicht weiter dargestellten Schienenfahrzeugs, insbesondere Schienenfahrzeugs, bilden kann. Die Anordnung 10 umfasst einen Pantographen 20 bzw. Stromabnehmer, der mit einem streckenseitigen Fahrdraht bzw. Oberleitung oder einer streckenseitigen Stromschiene eines streckenseitigen, also externen Energieversorgungsnetzes 30 in Verbindung gebracht werden kann.

Der Pantograph 20 steht über einen Hauptschalter 35 mit einem Transformator 40 in Verbindung, der an eine erste Anschlussseite 51 eines Umrichters 50 angeschlossen ist. Bei dem Umrichter 50 handelt es sich vorzugsweise um einen Vierquadrantensteller, welcher den von dem Transformator 40 heruntertransformierten Wechselstrom des Energieversorgungsnetzes 30 in einen Gleichstrom mit einem möglichst konstanten Spannungsniveau für den Gleichspannungszwischenkreis wandelt.

Eine zweite Anschlussseite 52 des Umrichters 50 steht mit einem Gleichspannungszwischenkreis 60 in Verbindung. An dem Gleichspannungszwischenkreis 60 liegt eine Zwischenkreisspannung Uz an.

An den Gleichspannungszwischenkreis 60 ist außerdem ein Gleichspannungssteller (DC/DC-Steller) 70 mit seiner ersten Anschlussseite 71 angeschlossen. Eine zweite Anschlussseite 72 des Gleichspannungsstellers 70 steht mit einem Energiespeicher 80, beispielsweise einer Traktionsbatterie, als anordnungseigener Energiebereitstellungseinrichtung in Verbindung.

Der Umrichter 50 und der Gleichspannungssteller 70 können jeweils, wie weiter unten noch im Detail erläutert werden wird, als Spannungsquelle für den Gleichspannungszwischenkreis 60 betrieben werden, wobei sie während ihres Spannungsquellenbetriebs jeweils versuchen, eine vorgegebene Sollzwischenkreisspannung Usoll als Zielspannung für den Gleichspannungszwischenkreis 60 einzustellen.

Der Gleichspannungszwischenkreis 60 dient zum Betrieb verschiedener Komponenten des Schienenfahrzeugs, beispielsweise für den Betrieb eines Pulswechselrichters 100 und eines daran angeschlossenen Antriebsmotors 110 sowie beispielweise eines Hilfsbetriebeumrichters 120, der an ein nicht weiter dargestelltes Bordnetz des Schienenfahrzeugs angeschlossen ist und dieses mit Energie speisen kann.

Zur Ansteuerung des Umrichters 50 und des Gleichspannungsstellers 70 weist die Anordnung 10 gemäß Figur 1 eine Steuereinrichtung 200 auf, die mittels eines ersten Steuersignals ST1 den Umrichter 50 und mittels eines zweiten Steuersignals ST2 den Gleichspannungssteller 70 ansteuert. Das Öffnen und Schließen des Hauptschalters 35 kann die Steuereinrichtung 20 mittels eines dritten Steuersignals ST3 veranlassen.

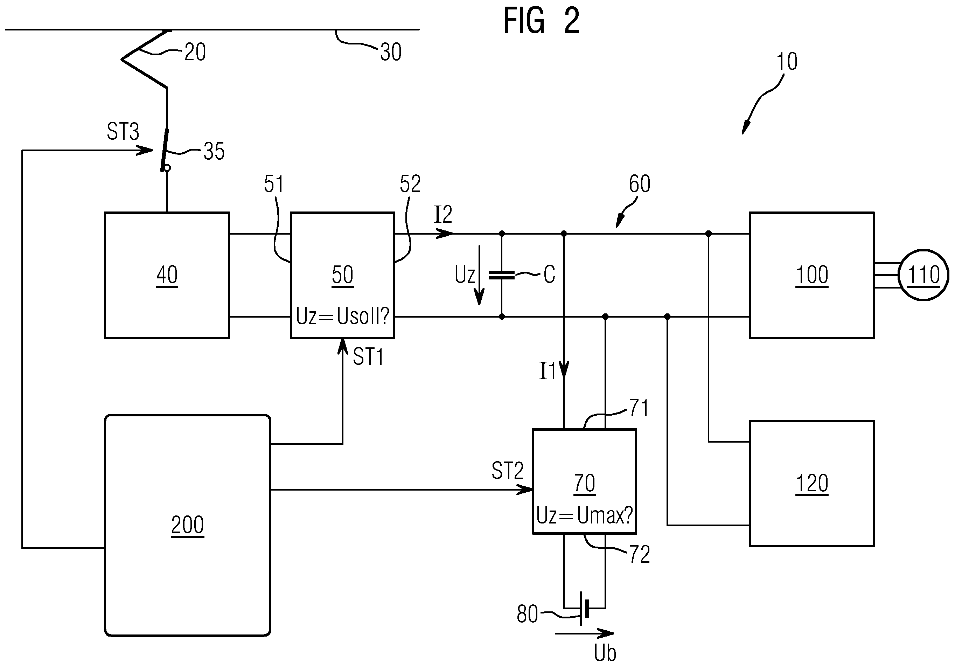

Die Steuereinrichtung 200 gemäß Figur 1 erlaubt folgende vier Betriebsmodi:
Erster Betriebsmodus der Anordnung 10: Externer Energieversorgungsbetrieb bei Anschluss an das externe Energieversorgungsnetz 30 (Figur 2).

Ist das externe Energieversorgungsnetz 30 verfügbar bzw. befindet sich das mit der Anordnung 10 ausgestattete Schienenfahrzeug im Bereich eines Fahrdrahts oder einer Fahrschiene des externen Energieversorgungsnetzes 30, so wird der Gleichspannungszwischenkreis 60 von dem Umrichter 50 als Spannungsquelle betrieben. Zu diesem Zweck wird die Steuereinrichtung 200 mittels des ersten Steuersignals ST1 den Umrichter 50 derart ansteuern, dass dieser die vorgegebene Sollzwischenkreisspannung Usoll als Zielspannung für den Gleichspannungszwischenkreis 60 einstellt.

Der Gleichspannungssteller 70 wird von der Steuereinrichtung 200 mittels des zweiten Steuersignals ST2 als Ladegerät für den Energiespeicher 80 betrieben. Dies bedeutet, dass der Gleichspannungssteller 70 den Energiespeicher 80 durch Energieentnahme aus dem Gleichspannungszwischenkreis 60 lädt, wenn der Energiespeicher 80 noch nicht ausreichend geladen ist, oder von dem Gleichspannungszwischenkreis 60 getrennt lässt, wenn der Energiespeicher 80 ausreichend geladen ist. Beispielsweise kann der Gleichspannungssteller 70 die Spannung Ub am Energiespeicher 80 mit einer maximalen Speicherspannung Umax vergleichen und den Ladevorgang entsprechend dem Vergleichsergebnis steuern. Ist die maximale Speicherspannung Umax kleiner als die Sollzwischenkreisspannung Usoll, so arbeitet der Gleichspannungssteller 70 im Ladebetrieb vorzugsweise stromgeregelt als Tiefsetzsteller.

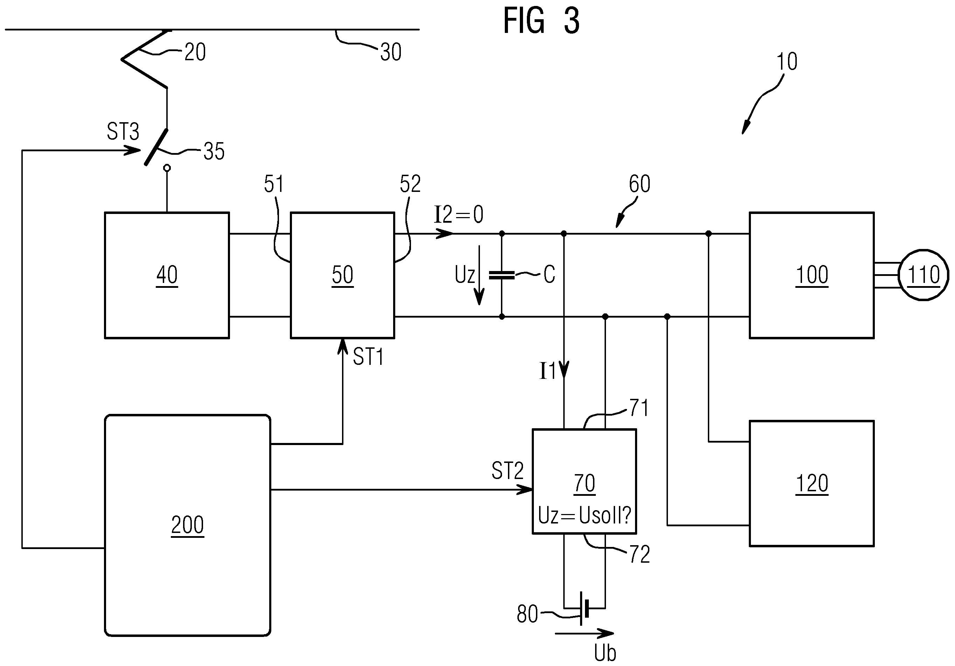

Zweiter Betriebsmodus der Anordnung 10: Energiespeicherbetrieb ohne externes Energieversorgungsnetz 30 (Figur 3).

Ist kein Anschluss an das externe Energieversorgungsnetz 30 möglich, beispielsweise weil der von dem Schienenfahrzeug befahrene Streckenabschnitt keinen entsprechenden Fahrdraht oder Stromschiene aufweist, so wird die Steuereinrichtung 200 den Gleichspannungssteller 70 in dessen dritter Betriebsart, also als Spannungsquelle für den Gleichspannungszwischenkreis 60, betreiben, und zwar derart, dass nun der Gleichspannungssteller 70 versucht, die vorgegebene Sollzwischenkreisspannung Usoll als Zielspannung für den Gleichspannungszwischenkreis 60 zu erzeugen.

Mittels des ersten Steuersignals ST1 wird der Umrichter 50 vorzugsweise deaktiviert, außerdem wird vorzugsweise der Hauptschalter 35 mittels des dritten Steuersignals ST3 geöffnet.

Sobald der Gleichspannungssteller 70 als Spannungsquelle für den Gleichspannungszwischenkreis 60 arbeitet, wird Energie aus dem Energiespeicher 80 in den Gleichspannungszwischenkreis 60 eingespeist, wenn seitens der daran angeschlossenen Komponenten wie beispielsweise seitens des Pulswechselrichters 100, seitens des Antriebsmotors 110 oder seitens des Hilfsbetriebeumrichters 120 mehr Energie aus dem Gleichspannungszwischenkreis 60 entnommen wird als eingespeist wird. Andernfalls wird Energie aus dem Gleichspannungszwischenkreis 60 entnommen und in den Energiespeicher 80 eingespeist, also wenn die genannten Komponenten insgesamt bzw. in Summe Energie einspeisen, wenn beispielweise im Bremsbetrieb des Schienenfahrzeugs der Antriebsmotor 110 ausreichend viel Bremsenergie in den Gleichspannungszwischenkreis 60 einspeist.

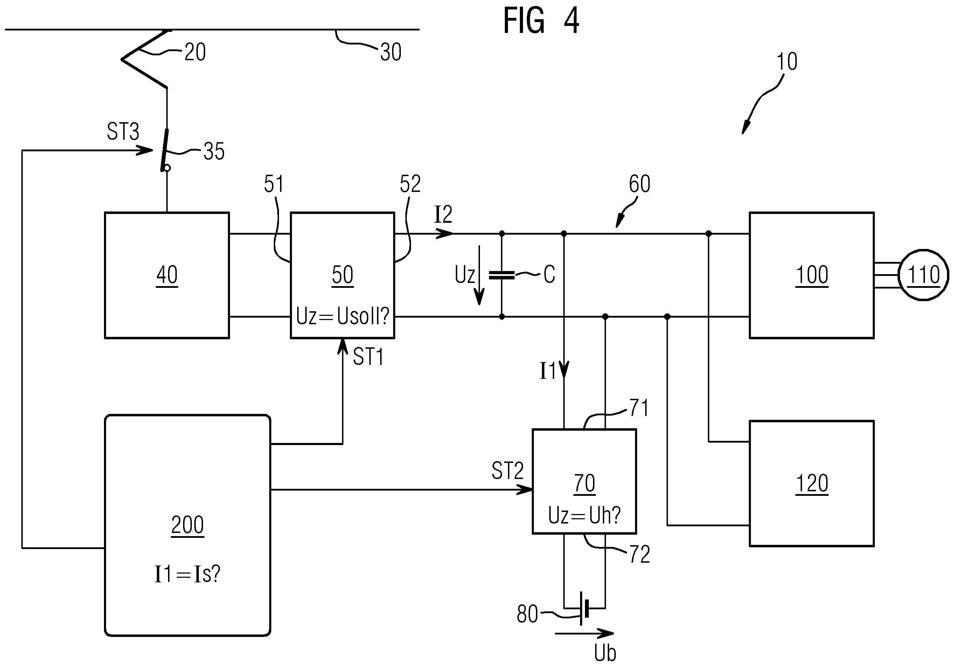

Dritter Betriebsmodus der Anordnung 10: Umschalten vom ersten Betriebsmodus in den zweiten Betriebsmodus, also vom externen Energieversorgungsbetrieb in den Energiespeicherbetrieb (Figur 4) .

Soll von dem ersten Betriebsmodus, bei dem der Umrichter 50 als Spannungsquelle arbeitet, in den zweiten Betriebsmodus, bei dem der Gleichspannungssteller 70 in seiner dritten Betriebsart bzw. als alleinige Spannungsquelle arbeitet, umgeschaltet werden, weil beispielsweise der noch befahrene elektrifizierte Streckenabschnitt in Kürze verlassen wird, so wird die Steuereinrichtung 200 zunächst in ihren dritten Betriebsmodus schalten.

Im dritten Betriebsmodus wird die Steuereinrichtung 200 den Umrichter 50 und den Gleichspannungssteller 70 gleichzeitig bzw. parallel als Spannungsquelle für den Gleichspannungszwischenkreis 60 betreiben. Um dabei eine Instabilität bezüglich der Regelung des Umrichters 50 und der Regelung des Gleichspannungsstellers 70 zu vermeiden, wird zur Entkopplung des Umrichterbetriebs und des Gleichspannungsstellerbetriebs die Steuereinrichtung 200 mittels des ersten Steuersignals ST1 dem Umrichter 50 und mittels des zweiten Steuersignals ST2 dem Gleichspannungssteller 70 unterschiedlich hohe Zielspannungen für den Gleichspannungszwischenkreis 60 vorgeben. Beispielsweise kann vorgesehen sein, dass die Steuereinrichtung 200 dem Umrichter 50 die Sollzwischenkreisspannung Usoll als Zielspannung für den Gleichspannungszwischenkreis 60 vorgibt, wohingegen dem Gleichspannungssteller 70 eine kleinere Hilfsspannung Uh vorgegeben wird. Beträgt die Sollzwischenkreisspannung beispielsweise 1.600 V, so kann die dem Gleichspannungssteller 70 vorgegebene Hilfsspannung Uh nur 1.500 V betragen. Die Hilfsspannung Uh ist vorzugsweise derart hoch bemessen, dass die an den Gleichspannungszwischenkreis 60 angeschlossenen Komponenten wie beispielsweise der Pulswechselrichter 100, der Antriebsmotor 110 oder der Hilfsbetriebeumrichter 120 mit dieser Spannung weiter betrieben werden können.

Da der Gleichspannungssteller 70 von seiner ersten Betriebsart, bei der er als Ladegerät für den Energiespeicher 80 arbeitet, nun in seine zweite Betriebsart, bei der er als Spannungsquelle zur Erzeugung der Hilfsspannung Uh arbeitet, umgestellt wird, kann bzw. wird eine gewisse Verzögerung in der Arbeitsweise des Gleichspannungsstellers 70 auftreten. Mit anderen Worten wird der Gleichspannungssteller 70 nicht abrupt von seiner ersten Betriebsart in seine zweite Betriebsart wechseln können. Diese Verzögerung des Übergangs von der ersten Betriebsart in die zweite Betriebsart wird die Steuereinrichtung 200 überwachen, indem sie den Strom I1, der durch den Gleichspannungssteller 70 fließt, überwacht.

Stellt sie bei der Überwachung des Stromes I1 fest, dass dieser einen vorgegebenen Umschaltstromwert Is erreicht, so schließt sie daraus, dass der Gleichspannungssteller 70 seine zweite Betriebsart erreicht hat bzw. diese ausübt und - wie gewünscht - versucht, die Hilfsspannung Uh als Zielspannung für den Gleichspannungszwischenkreis 60 einzustellen. Da die Hilfsspannung Uh kleiner als die Sollzwischenkreisspannung Usoll ist, wird es nämlich beim Betrieb des Gleichspannungsstellers 70 in dessen zweiter Betriebsart dazu kommen, dass der Gleichspannungssteller 70 Strom aus dem Gleichspannungszwischenkreis 60 in den Energiespeicher 80 leitet, um den Kondensator C des Gleichspannungszwischenkreises 60 - ausgehend von der von dem Umrichter 50 eingestellten Sollzwischenkreisspannung Usoll - zu entladen und die Zwischenkreisspannung Uz auf den Wert der Hilfsspannung Uh abzusenken.

Sobald die Steuereinrichtung 200 erkannt hat, dass der Strom I1 durch den Gleichspannungssteller 70 den Umschaltstromwert Is erreicht hat, wird sie den Umrichter 50 deaktivieren, sodass der Gleichspannungszwischenkreis 60 vom Transformator 40 und vom Hauptschalter 35 entkoppelt wird. Anschließend wird die Steuereinrichtung 200 vorzugsweise mittels des dritten Steuersignals ST3 den Hauptschalter 35 öffnen, um eine Trennung vom Pantographen 20 herbeizuführen.

Vorteilhaft ist es, wenn der Strom I1 durch den Gleichspannungssteller 70 in der zweiten Betriebsart sowie beim Umschalten von der ersten Betriebsart in die zweite Betriebsart von der Steuereinrichtung 200 auf einen vorgegebenen Maximalstromwert begrenzt wird, um eine Beschädigung des Gleichspannungsstellers 70 und eine Beschädigung des Energiespeichers 80 zu vermeiden.

Nachdem der Umrichter 50 abgeschaltet worden ist, kann die Steuereinrichtung 200 die Zielspannung für den Gleichspannungssteller 70 von der Hilfsspannung Uh auf die Sollzwischenkreisspannung Usoll erhöhen, wodurch der Gleichspannungssteller 70 in seine dritte Betriebsart überführt wird.

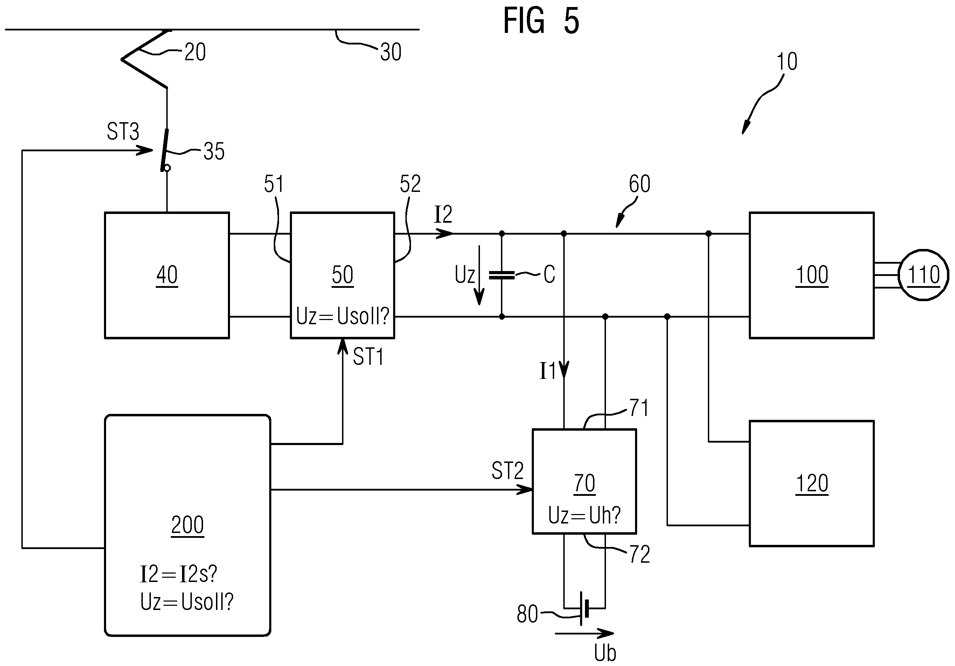

Vierter Betriebsmodus der Anordnung 10: Umschalten vom zweiten Betriebsmodus in den ersten Betriebsmodus, also vom Energiespeicherbetrieb in den externen Energieversorgungsbetrieb (Figur 5).

Wird die Anordnung 10 mit dem Gleichspannungssteller 70 als Spannungsquelle für den Gleichspannungszwischenkreis 60 betrieben und ist der Umrichter 50 deaktiviert, so erfolgt ein Umstellen vom Energieversorgungsbetrieb in den Umrichterbetrieb vorzugsweise wie folgt:
Zunächst wird die Steuereinrichtung 200 den Gleichspannungssteller 70 von der dritten Betriebsart, bei der dieser als Spannungsquelle die Sollzwischenkreisspannung Usoll als Zielspannung einstellt, in die zweite Betriebsart umschalten, bei der der Gleichspannungssteller 70 als Zielspannung eine kleinere Spannung, nämlich wieder die Hilfsspannung Uh, einstellen soll. Mit anderen Worten wird für den Gleichspannungssteller 70 lediglich die Zielspannung von der Sollzwischenkreisspannung Usoll auf die Hilfsspannung Uh abgesenkt.

Gleichzeitig oder danach wird der Umrichter 50 aktiviert. Da nach dem Einschalten des Umrichters 50 eine gewisse Einschaltverzögerung bis zu einem korrekten Umrichterbetrieb auftreten wird, wird die Steuereinrichtung 200 nach dem Aktivieren des Umrichters 50 beispielsweise den Betrieb des Umrichters 50 überwachen.

Stellt sie dabei fest, dass die Zwischenkreisspannung Uz ansteigt und die Hilfsspannung Uh, die vom Gleichspannungssteller 70 eingestellt werden soll, überschreitet, so schließt sie daraus, dass der Umrichter 50 seinen korrekten Spannungsquellenbetrieb aufgenommen hat. Sobald die Zwischenkreisspannung Uz der vorgegebenen Sollzwischenkreisspannung Usoll entspricht, wird sie den Umrichter 50 als vollständig im Betrieb befindlich ansehen, sodass der Gleichspannungssteller 70 von seiner zweiten Betriebsart in seine erste Betriebsart, bei der er als Ladegerät arbeitet, umgeschaltet werden kann.

Alternativ oder zusätzlich kann die Steuereinrichtung 200 den Strom I2 zwischen dem Umrichter 50 und dem Gleichspannungszwischenkreis 60 überwachen und den Gleichspannungssteller 70 in die erste Betriebsart schalten, sobald der Strom I2, der von dem Umrichter 50 in den Gleichspannungszwischenkreis 60 fließt, einen vorgegebenen Schwellenwert I2s überschreitet.

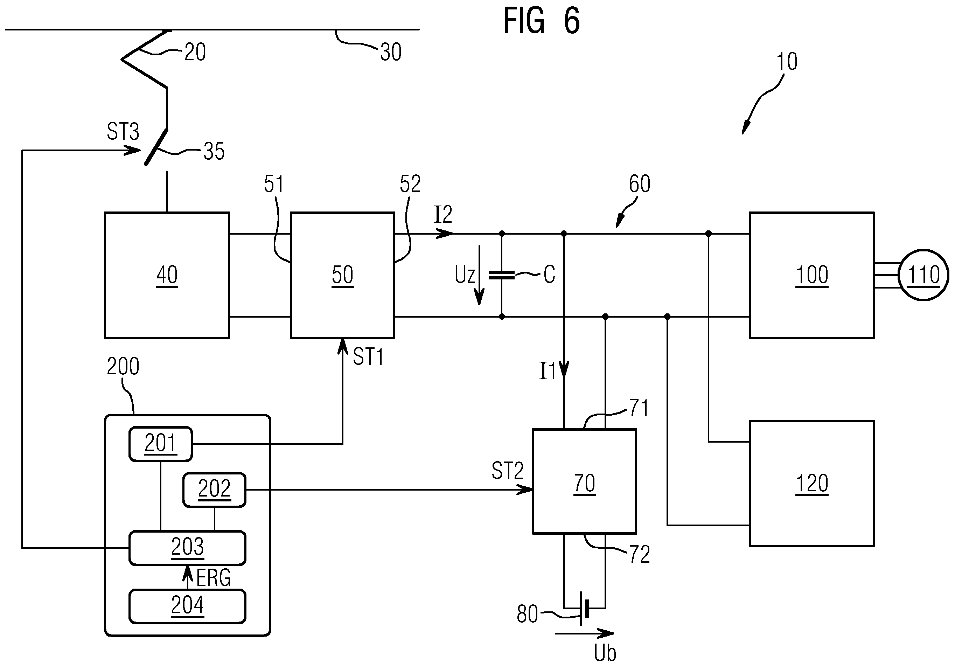

Die Figur 6 zeigt ein Ausführungsbeispiel für eine Anordnung 10, bei der die Steuereinrichtung 200 ein Umrichtersteuermodul 201 für die Ansteuerung des Umrichters 50 und ein Gleichspannungsstellermodul 202 zur Ansteuerung des Gleichspannungsstellers 70 aufweist. Außerdem ist ein Überwachungsmodul 203 vorhanden, nämlich zur Überwachung des Stroms I1, der in den Gleichspannungssteller 70 fließt, zur Überwachung des Stroms I2, der vom Umrichter 50 in den Gleichspannungszwischenkreis 60 fließt, und/oder zur Überwachung der Zwischenkreisspannung Uz am Gleichspannungszwischenkreis 60.

Darüber hinaus weist die Steuereinrichtung 200 ein Zentralmodul 204 auf, das auf der Basis der Überwachungsergebnisse ERG des Überwachungsmoduls 203 das Umrichtersteuermodul 201 und das Gleichspannungsstellermodul 202 ansteuert, und zwar derart, dass Umrichter 50 und Gleichspannungssteller 70 so arbeiten, wie dies oben im Zusammenhang mit den Figuren 1 bis 5 erläutert worden ist. Diesbezüglich gelten die obigen Erläuterungen entsprechend.

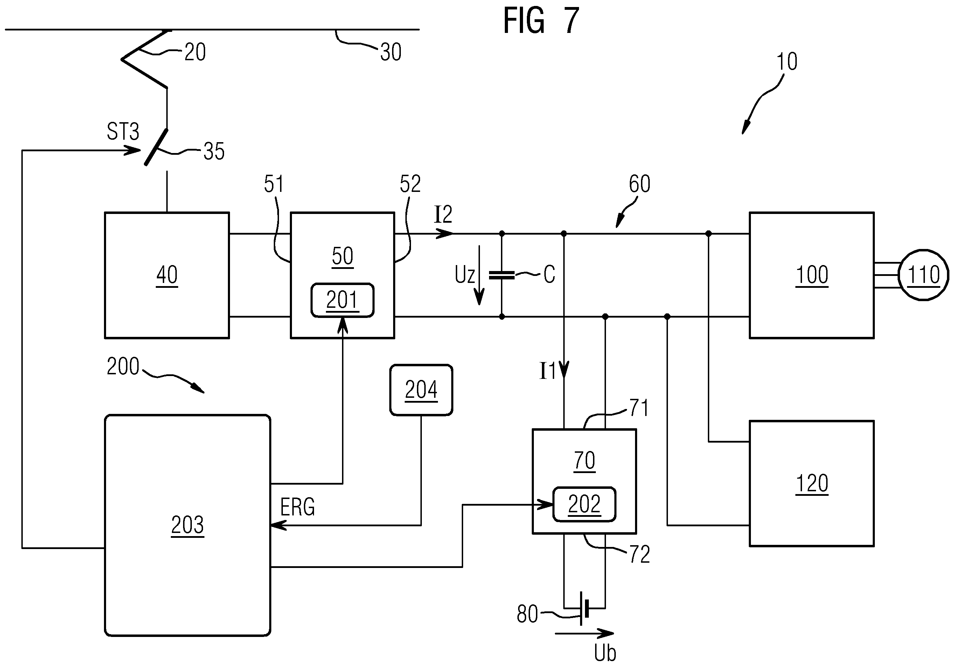

Die Figur 7 zeigt ein Ausführungsbeispiel für eine Anordnung 10, bei der die im Zusammenhang mit der Figur 6 gezeigten Module der Steuereinrichtung 200 dezentral angeordnet sind. So lässt sich erkennen, dass das Umrichtersteuermodul 201 im Umrichter 50 und das Gleichspannungsstellermodul 202 im Gleichspannungssteller 70 angeordnet sind bzw. Komponenten des Umrichters 50 und des Gleichspannungsstellers 70 bilden. Das Zentralmodul 204 und das Überwachungsmodul 203 sind separat angeordnet.

Im Übrigen gelten die obigen Erläuterungen im Zusammenhang mit den Figuren 1 bis 6 bei dem Ausführungsbeispiel gemäß Figur 7 entsprechend.

### Bezugszeichenliste

- 10: Anordnung
- 20: Pantograph
- 30: externes Energieversorgungsnetz
- 35: Hauptschalter
- 40: Transformator
- 50: Umrichter
- 51: erste Anschlussseite
- 52: zweite Anschlussseite
- 60: Gleichspannungszwischenkreis
- 70: Gleichspannungssteller / DC/DC-Steller
- 71: erste Anschlussseite
- 72: zweite Anschlussseite
- 80: Energiebereitstellungseinrichtung / Energiespeicher
- 100: Pulswechselrichter
- 110: Antriebsmotor
- 120: Hilfsbetriebeumrichter
- 200: Steuereinrichtung
- 201: Umrichtersteuermodul
- 202: Gleichspannungsstellermodul
- 203: Überwachungsmodul
- 204: Zentralmodul

- C: Kondensator
- ERG: Überwachungsergebnis
- I1: Strom
- I2: Strom
- I2s: Stromschwelle
- Is: Umschaltstromwert
- ST1: erstes Steuersignal
- ST2: zweites Steuersignal
- ST3: drittes Steuersignal
- Ub: Spannung
- Uh: Hilfsspannung
- Umax: maximale Speicherspannung
- Usoll: Sollzwischenkreisspannung
- Uz: Zwischenkreisspannung

## Patentansprüche

1. Antriebsanordnung (10) eines Schienenfahrzeugs, aufweisend zumindest
- einen Umrichter (50), der mit einer ersten Anschlussseite (51) mit einem Energieversorgungsnetz (30) verbindbar ist und mit einer zweiten Anschlussseite (52) an einen Gleichspannungszwischenkreis (60) angeschlossen ist,
- einen Gleichspannungssteller (70), der mit einer ersten Anschlussseite (71) an den Gleichspannungszwischenkreis (60) und mit einer zweiten Anschlussseite (72) an eine anordnungseigene Energiebereitstellungseinrichtung (80) angeschlossen ist, und
- eine Steuereinrichtung (200), die ausgestaltet ist, in einem Normalbetrieb wahlweise entweder den Umrichter (50) oder den Gleichspannungssteller (70) als Spannungsquelle für den Gleichspannungszwischenkreis (60) zu betreiben und jeweils eine Sollzwischenkreisspannung (Usoll) als Zielspannung für den Gleichspannungszwischenkreis (60) vorzugeben,
**dadurch gekennzeichnet, dass** die Steuereinrichtung (200) ferner ausgestaltet ist, in einem Umschaltbetrieb den Umrichter (50) und den Gleichspannungssteller (70) gleichzeitig zu betreiben, wobei sie dem Umrichter (50) und dem Gleichspannungssteller (70) unterschiedliche Zielspannungen für den Gleichspannungszwischenkreis (60) vorgibt.

2. Anordnung (10) nach Anspruch 1, d**adurch gekennzeichnet**, dass die Steuereinrichtung (200) in dem Umschaltbetrieb die Zielspannungen derart vorgibt, dass sie um zumindest 10%, bezogen auf die höhere Zielspannung, voneinander abweichen.

3. Anordnung (10) nach einem der voranstehenden Ansprüche, **dadurch gekennzeichnet, dass** die Steuereinrichtung (200) in dem Umschaltbetrieb dem Umrichter (50) als Zielspannung die Sollzwischenkreisspannung (Usoll) und dem Gleichspannungssteller (70) als Zielspannung eine Hilfsspannung (Uh), die niedriger ist als die Sollzwischenkreisspannung (Usoll), vorgibt.

4. Anordnung (10) nach einem der voranstehenden Ansprüche, **dadurch** g**ekennzeichnet**, dass die Steuereinrichtung (200) den Gleichspannungssteller (70) in zumindest
- einer ersten Betriebsart, in welcher der Gleichspannungssteller (70) als Ladegerät für die anordnungseigene Energiebereitstellungseinrichtung (80) arbeitet,
- einer zweiten Betriebsart, in welcher der Gleichspannungssteller (70) als Zielspannung die Hilfsspannung (Uh) einstellt, und
- einer dritten Betriebsart, in welcher der Gleichspannungssteller (70) als Spannungsquelle arbeitet und als Zielspannung die Sollzwischenkreisspannung (Usoll) einstellt,
betreibt.

5. Anordnung (10) nach Anspruch 4, **dadurch gekennzeichnet, dass** zumindest in einer der Betriebsarten ein Strom (I1) durch den Gleichspannungssteller (70) auf einen vorgegebenen Maximalstromwert begrenzt wird.

6. Anordnung (10) nach Anspruch 4 oder 5, **dadurch gekennzeichnet,dass** die Steuereinrichtung (200) ferner ausgestaltet ist, -in dem Umschaltbetrieb, bei einem Umschalten vom Umrichter (50) zum Gleichspannungssteller (70),
- den Gleichspannungssteller (70) in der zweiten Betriebsart betreibt und einen Strom (I1) durch den Gleichspannungssteller (70) in Richtung der Energiebereitstellungseinrichtung (80) überwacht, und
- den Umrichter (50) deaktiviert und den Gleichspannungssteller (70) in die dritte Betriebsart schaltet, sobald der Strom (I1) durch den Gleichspannungssteller (70) einen vorgegebenen Umschaltstromwert (Is), insbesondere einen Maximalstromwert, erreicht.

7. Anordnung (10) nach einem der Ansprüche 4 bis 6, **dadurch gekennzeichnet, dass** die Steuereinrichtung (200) ferner ausgestaltet ist, -in dem Umschaltbetrieb, bei einem Umschalten vom Gleichspannungssteller (70) zum Umrichter (50),
- den Gleichspannungssteller (70) in der zweiten Betriebsart betreibt und die Zwischenkreisspannung (Uz) überwacht, und
- den Gleichspannungssteller (70) in die erste Betriebsart schaltet, sobald die Zwischenkreisspannung (Uz) eine vorgegebene Umschaltspannung, insbesondere die Sollzwischenkreisspannung (Usoll), erreicht.

8. Anordnung (10) nach einem der Ansprüche 4 bis 6, **dadurch** g**ekennzeichnet,** dass die Steuereinrichtung (200) ferner ausgestaltet ist, -in dem Umschaltbetrieb, bei einem Umschalten vom Gleichspannungssteller (70) zum Umrichter (50),
- den Gleichspannungssteller (70) in der zweiten Betriebsart betreibt und den Stromfluss zwischen Umrichter (50) und Gleichspannungszwischenkreis (60) überwacht, und
- den Gleichspannungssteller (70) in die erste Betriebsart schaltet, sobald ein Strom (I2) von dem Umrichter (50) in den Gleichspannungszwischenkreis (60) fließt oder der Strom eine vorgegebene Stromschwelle (I2s) überschreitet.

9. Anordnung (10) nach einem der voranstehenden Ansprüche, **dadurch gekennzeichnet, dass** bei einer Energieeinspeisung in den Gleichspannungszwischenkreis (60) von zumindest einer elektrischen Komponente
- bei einem aktiven Umrichter (50) die eingespeiste elektrische Energie über den Umrichter (50) in das Energieversorgungsnetz (30) und über den Gleichspannungssteller (70) in die Energiebereitstellungseinrichtung (80) gespeist wird, und
- bei einem deaktivierten Umrichter (50) die eingespeiste elektrische Energie über den Gleichspannungssteller (70) in die Energiebereitstellungseinrichtung (80) gespeist wird.

10. Anordnung (10) nach Anspruch 9, **dadurch** g**ekennzeichnet**, dass
- die zumindest eine Komponente ein über einen Wechselrichter (100) mit dem Gleichspannungszwischenkreis (60) verbundener Traktionsmotor (110) ist, und/oder
- die zumindest eine Komponente ein Hilfsbetriebeumrichter (120) ist.

11. Anordnung (10) nach einem der voranstehenden Ansprüche, **dadurch gekennzeichnet, dass** die Steuereinrichtung (200) zur Ansteuerung des Umrichters (50) ein Umrichtersteuermodul (201), zur Ansteuerung des Gleichspannungsstellers (70) ein Gleichspannungsstellermodul (202) und zur Überwachung von Strom und/oder Spannung ein Überwachungsmodul (203) aufweist.

12. Anordnung (10) nach Anspruch 11, **dadurch gekennzeichnet, dass** das Umrichtersteuermodul (201) in dem Umrichter (50) und das Gleichspannungsstellermodul (202) in dem Gleichspannungssteller (70) integriert ist.

13. Anordnung (10) nach einem der voranstehenden Ansprüche, **dadurch gekennzeichnet, dass** die Energiebereitstellungseinrichtung (80) eine Batterie, insbesondere eine Traktionsbatterie, ist oder eine solche umfasst.

14. Schienenfahrzeug, **dadurch gekennzeichnet, dass** es zumindest eine Antriebsanordnung (10) nach einem der voranstehenden Ansprüche aufweist.

15. Verfahren zum Betreiben einer Antriebsanordnung (10), wobei die Antriebsanordnung zumindest aufweist:
- einen Umrichter (50), der mit einer ersten Anschlussseite (51) mit einem Energieversorgungsnetz (30) verbindbar ist und mit einer zweiten Anschlussseite (52) an einen Gleichspannungszwischenkreis (60) angeschlossen ist,
- einen Gleichspannungssteller (70), der mit einer ersten Anschlussseite (71) an den Gleichspannungszwischenkreis (60) und mit einer zweiten Anschlussseite (72) an eine anordnungseigene Energiebereitstellungseinrichtung (80) angeschlossen ist, und
- eine Steuereinrichtung (200), welche in einem Normalbetrieb wahlweise entweder den Umrichter (50) oder den Gleichspannungssteller (70) als Spannungsquelle für den Gleichspannungszwischenkreis (60) betreibt und jeweils eine Sollzwischenkreisspannung (Usoll) als Zielspannung für den Gleichspannungszwischenkreis (60) vorgibt,
**dadurch gekennzeichnet, dass** von der Steuereinrichtung (200) in einem Umschaltbetrieb der Umrichter (50) und der Gleichspannungssteller (70) gleichzeitig betrieben werden, wobei sie dem Umrichter (50) und dem Gleichspannungssteller (70) unterschiedliche Zielspannungen für den Gleichspannungszwischenkreis (60) vorgibt.
